Europäisches Patentamt

European Patent Office

Office européen des brevets

(19)

(11) Publication number : **0 481 644 B1**

# (12) EUROPEAN PATENT SPECIFICATION

(45) Date of publication of patent specification :
14.06.95 Bulletin 95/24

(51) Int. Cl.⁶ : **G01C 17/30**

(21) Application number : **91309174.0**

(22) Date of filing : **07.10.91**

(54) **Output signal processing unit of a fluxgate sensor.**

(30) Priority : **16.10.90 JP 275273/90**

(43) Date of publication of application :
**22.04.92 Bulletin 92/17**

(45) Publication of the grant of the patent :
**14.06.95 Bulletin 95/24**

(84) Designated Contracting States :
**DE FR GB**

(56) References cited :
**EP-A- 0 218 273**
**GB-A- 2 218 517**
**US-A- 3 844 051**
**PATENT ABSTRACTS OF JAPAN, vol. 9, no. 33
(P-334)(1756), 13 February 1985 & JP-A-59 176
621**

(73) Proprietor : **FUJITSU TEN LIMITED**
**1-2-28 Gosho-dori,**
**Hyogo-ku**
**Kobe-shi, Hyogo (JP)**

(72) Inventor : **Nakatani, Yasuhiro**
**2-26-902 Hanayama Higashi,**
**Kita-ku**
**Kobe-shi, Hyogo (JP)**

(74) Representative : **Rackham, Stephen Neil et al**
**GILL JENNINGS & EVERY,**
**Broadgate House,**
**7 Eldon Street**
**London EC2M 7LH (GB)**

EP 0 481 644 B1

## Description

BACKGOUND OF THE INVENTION

### 1. Field of the invention

The present invention relates to a navigation system of a vehicle for offering a geographical position information during driving to a driver. More particularly, this invention relates to an improvement of an output signal processing unit of a fluxgate sensor used in the navigation system, which determines a moving direction of the vehicle.

### 2. Description of the Related Art

Generally, a conventional navigation system of a vehicle includes an output signal processing unit of a fluxgate sensor which measures an angle of a moving direction relative to the magnetic north in order to determine a geometrical position of a vehicle during driving. The output signal processing unit of a fluxgate sensor has a fluxgate sensor which obtains components of terrestrial magnetism both in the X and Y directions where for example the moving direction is denoted as the X-axis and the direction perpendicular to it is denoted as the Y-axis, and measures momentarilly the directions of the vehicle. The geometrical positions of the vehicle XX and YY are obtained from said directions and velocity v of a velocity sensor of the vehicle, displayed in a map of a display, and thereby used in order to offer a geographical position information of the vehicle to a driver.

Further the above output signal processing unit of a fluxgate sensor includes a low pass filter removing a noise signal with a high frequency component due to a magnetic flux generated by magnetizing of the vehicle in the periphery of it except the terrestrial magnetism and due to variations etc. of the magnetic flux in a change of magnetic enviroment generated by driving of the vehicle in the periphery of it. This low pass filter allows an output signal of the fluxgate sensor to be processed smoothly so that a detecting accuracy of terrestrial magnetism is enhanced. Therefore the above noise signal with a high frequency component does not cause said geographical positions to generate useless variations in the display so as to prevent the driver from making a mistake.

In the above output signal processing unit of a fluxgate sensor of the prior art, however, when the vehicle turns quickly, a high frequency component appears in an output change of the fluxgate sensor, while the above low pass filter causes a time delay since it processes smoothly the high frequency component in the output change of the fluxgate sensor. Consequently a problem arises in that the detecting accuracy of the direction in terrestrial magnetism is declined, a following performance of the geometrical position becomes poor and the driver makes easily a mistake. Inversely a following performance become better if the low pass filter is not used, while the noise signal of the high frequency component can not be removed.

EP-A-0218273 discloses a navigation device including two direction sensors, one of which detects a change in the direction of the wheels of a vehicle in which the device is provided, the other of which is an electrical compass, such as a flux gate sensor. The output of the electrical compass is passed through a low-pass filter, and the output of the other directional sensor is passed through a high-pass filter. The two filtered outputs are combined in a summing circuit, and the resulting signal is used to determine the direction of travel. GB-A-2218517 also includes two sensors, an electrical compass, the output of which is used to determine the direction when the rate of turn is low, and a rate of turn sensor, the output of which is used to determine the direction when the rate of turn is high.

Another direction system is disclosed in US-A-3844051. In this system, a signal from a flux-gate sensor is filtered by a low-pass filter, the frequency of which is controlled to remove unwanted high frequency noise.

According to this invention in an output signal processing unit of a fluxgate sensor, the output signal processing unit comprises a low pass filter for removing a high frequency component from an output of the fluxgate sensor and;

a rate sensor for detecting an angular velocity of rotation on turning of the vehicle;

characterized in that it further comprises a means for raising or lowering the cutoff frequency of the low pass filter in response to the increase or decrease of the angular velocity as detected by the rate sensor.

The invention will be further described with reference to embodiments therof, and to the accompanying drawings. Note, in the drawings, like parts are designated throughout by the same reference characters.

Figure 1 is a view showing a principle of constitute according to the present invention;

Fig.2 is a view showing an output signal processing unit of a fluxgate sensor according to the embodiment of the present invention;

Fig.3 is a view showing characteristics of P. determining a multiplying factor;

Fig.4 is a view showing amplitude characteristics of a low pass filter of Fig.2; and,

Fig.5 is a view showing a wave shape of an output signal in the low pass filter according to the embodiment.

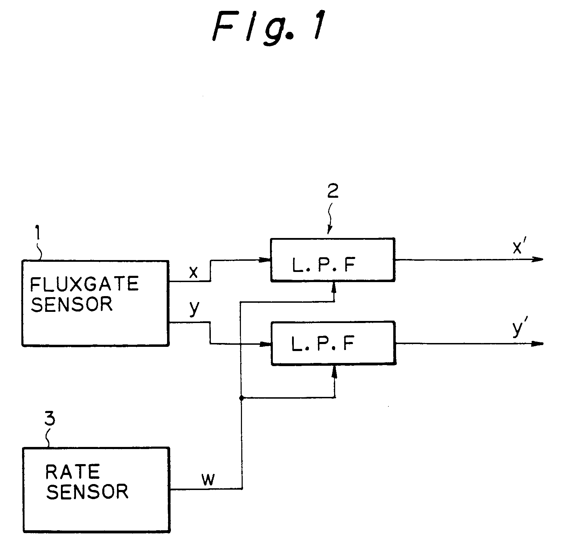

Figure 1 is a view showing a principle which constitutes the present invention. With this object in view, the essence of the invention resides in an output signal processing unit of a fluxgate sensor comprising a low pass filter 2 for smoothing an output of the fluxgate sensor, a cutoff frequency of which becomes high or low depending on increasing or decreasing of the angular velocity in rotation in the turning of the vehicle.

With the output signal processing unit of a fluxgate sensor, when the vehicle is going straight ahead, the angular velocity in rotation $\omega$ of the rate sensor 3 is zero so that the cutoff frequency of the low pass filter is smoothed to remove the high frequency noise. When the vehicle turns, the cutoff frequency of the low pass filter 2 becomes high depending on the increase of the angular velocity in rotation of the rate sensor 3 so that the frequency component of the output of the fluxgate sensor 1 is not smoothed to improve the following performance without time lag. Then the high frequency component noise also passes through the low pass filter 2, but is smaller than the output signal of the fluxgate sensor 1 and passing time of the noise is very short, so a driver does not make any mistake.

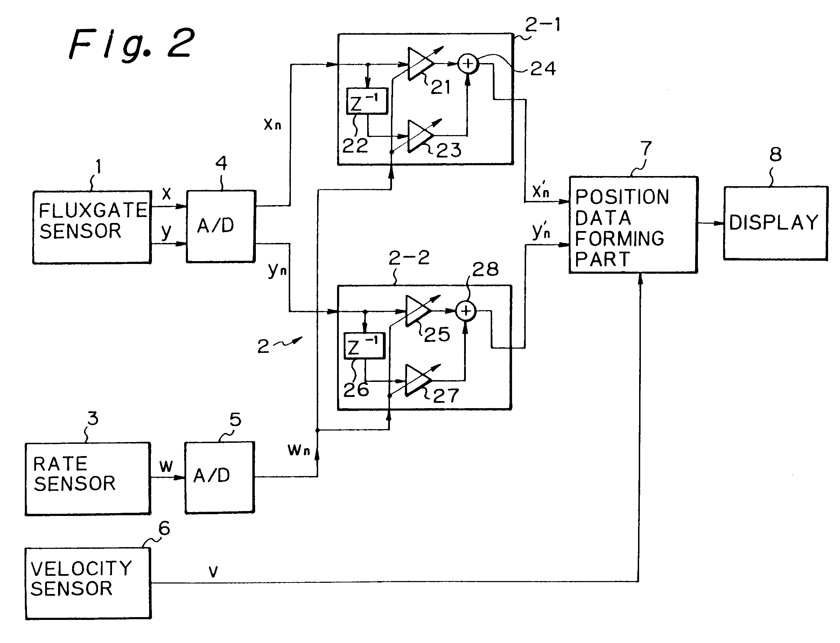

The preferred embodiment of an output signal processing unit of a fluxgate sensor according to the present invention will be discussed with reference to the accompanying drawings. Fig.2 is a view showing an output signal unit of a fluxgate sensor according to the embodiment of the present invention. Overall construction of the preferred embodiment of the output signal processing unit of a fluxgate sensor will be discussed with referrence to Fig.2. The output signal processing unit of a fluxgate sensor includes a fluxgate sensor 1 which detects components of terrestrial magnetism both in the X and Y directions where for example the moving direction is denoted as the X-axis and the direction perpendicular to it is denoted as the Y-axis, and measures momentarilly the directions of the vehicle, a low pass filter 2 for removing high frequency component of the output of the fluxgate sensor, a rate sensor 3 of for example a piezo-electeric oscilating gyro-sensor which detects an angular velocity $\omega$ of rotation of a vehicle due to the turning of it and makes a cut off frequency of the low pass filter 2 increase or decrease coresponding to increasing or decreasing of the angular velocity $\omega$ of the rotation respectively, an A / D ( Analog to Digital) converter 4 for converting analog signals x, y of the fluxgate sensor 1 into digital signals $x_n$ ,$y_n$ , an A/D converter 5 of the rate sensor 3 for converting an analog signal $\omega$ in to a digital signal $\omega_n$ , a velocity sensor 6 which detects a velocity signal v of the velocity, a position data forming part 7 which forms geometorical position data xx and yy of the vehicle from the output signals $x_n'$ and $y_n'$ of the fluxgate sensor 1 in which the high frequency components are removed by the low pass filter and the velocity signal v of the velocity sensor 6, a display 8 for displaying the geometrical position data xx and yy processed by the position data forming part 7 in a map drawn up beforehand.

Discussion will be given herebelow for the low pass filter 2. As shown in Fig.2, the filter 2 includes two low pass filters 2-1 and 2-2 coresponding to the digital signals $x_n$ ,$y_n$ respectively from the fluxgate sensor 1. The low pass filter 2-1 of for example two elements filter includes a variable multiplier 21 which inputs the X component signal from the A / D converter 4, a delay element 22 for delaying the x component signal by one sampling period, a variable multiplier 23 which inputs a delay signal from the delay element 22, and an adder 24 for adding the outputs of the variable multipliers 21 and 23 repectively to output the added signal to the position data forming part 7. The explanation of the low pass filter 2-2 is omitted to be the same constitute as that of the above low pass filter 2-1.

Next, an opperation of the output signal processing unit of a fluxgate sensor will be discussed herebelow. The vehicle is provided with X coordinate along the moving direction of it and Y coordinate perpendicular thereto, and the fluxgate sensor so as to able to measure magnetic flux density $B_x$ in the direction and magnetic flux density $B_y$ in the direction y. Expressing magnetic flux density of terrestrial magnetism as B, the fluxgate sensor 1 generates an electrical signal X proportional to the magnetic flux density $B_x$ as a x directional component and an electrical signal y proportional to the magnetic flux density $B_y$ as a Y directional component. The analog signals x and y from the fluxgate sensor 1 are convertered into the digital signals $x_n$ and $y_n$ respectively. In the low pass filters 2-1 and 2-2 , setting the factors of the multipliers 21 and 25 to $\alpha$ = $P_n$ /$P_{min}$ respectively and the factors of the multipliers 23 and 27 to $\beta$ =($P_{min}$ - $P_n$ )/$P_{min}$ , since the inputs of the low pass filters 2-1 and 2-2 are $x_n$ and $y_n$ , their outputs $x_n'$ and $y_n'$ can be shown that

$$x_n' = \alpha \cdot x_n + \beta \cdot x_{n-1}$$
$$= \{ x_n \cdot P_n + x_{n-1} \cdot ( P_{min} - P_n ) \} / P_{min}$$
$$y_n' = \alpha \cdot y_n + \beta \cdot y_{n-1}$$
$$= \{ y_n \cdot P_n + y_{n-1} \cdot ( P_{min} - P_n ) \} / P_{min} ,$$

where
$P_n$ = min ( $P_{min}$ , k $\cdot$ $\omega_n$ ), $\omega_n$ is an angular velocity of rotation of the rate sensor 3, and k takes a constant value.

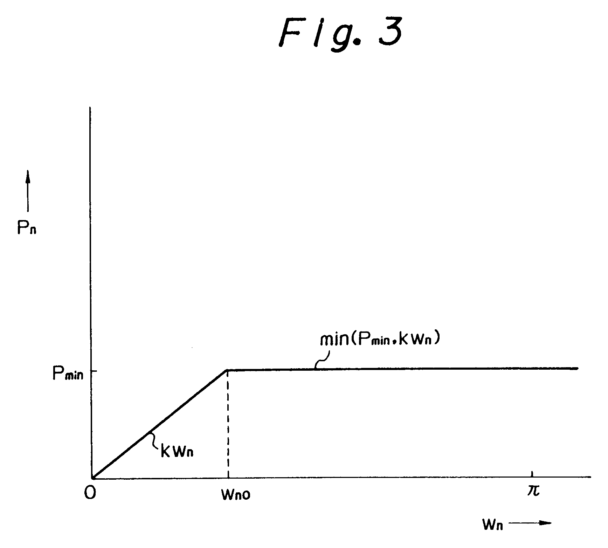

Fig.3 is a view showing characteristics of $P_n$ determining a multiplying factor. As shown in the Figure, when the vehicle is not turning, the the angular velocity $\omega_n$ of rotation is in a range of $\omega_n$ =0 to a given value of $\omega_{n0}$.

Further in the case of $0 \leqq \omega_n \leqq \omega_{n0}$,
$P_n$ = $P_{min}$ = k $\cdot$ $\omega_{n0}$, and in the case of $\omega_n \geqq \omega_{n0}$ ,$P_n$ = k $\cdot$ $\omega_n$ . In such a way the present invention allows the multiplication factors of the multipliers 21, 25 and 23, 27 to be variable depending on the output $\omega_n$ of the rate sensor 3.

Generally an amplitude | A($\omega_n$ $\cdot$ T )| of $x_n'$ and

$y_n$' in this case can be expressed as follows.

$$|A(\omega_n \cdot T)| = \sqrt{\alpha^2 + \beta^2 + 2\alpha\beta \cos\omega_n T}$$

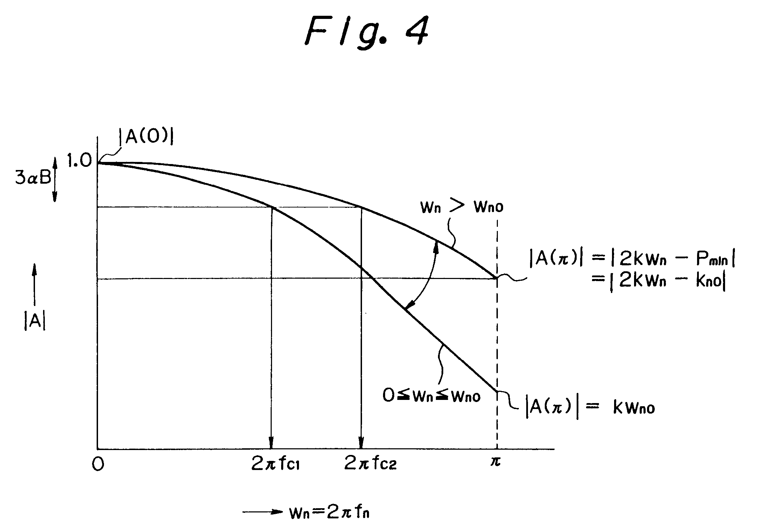

The vertical axis shown in Figure 4 indicates the angular velocity of rotation $\omega_n = 2\pi f_n$ and the horizontal axis indicates the amplitude $|A(\omega_n T)|$ where $f_n$ denotes frequency.

When $\omega_n \cdot T = 0$, $|A(0)| = |\alpha + \beta| = 1.0$ for any of $\alpha$ and $\beta$.

On the other hand when $\omega_n \cdot T = \pi$, $|A(\pi)| = |\alpha - \beta| = |2P_n - P_{min}| = |2k \cdot \omega_n - P_{min}| = |2k \cdot \omega_n - k \cdot \omega_{n0}|$. When $\alpha$ and $\beta$ change depending on $\omega_n$, the curve shown in the Fig.4 moves upwardly and downwardly.

Further when $0 \leq \omega_n \leq \omega_{n0}$, $|A(\pi)| = |2k \cdot \omega_n - P_{min}| = k \cdot \omega_{n0}$. In the present invention the angular velocity of rotation $\omega_n$ is given by the rate sensor 3 so that $\alpha$ and $\beta$ of the low pass filter are controlled. As shown in the Figure when $0 \leq \omega_n \leq \omega_{n0}$, $|A(0)|$ becomes smaller by 3dB at a cutoff frequency $f_{c1}$. And letting a cutoff frequency be $f_{c2}$ when $\omega_n > \omega_{n0}$, an inequality of $f_{c2} > f_{c1}$ holds. That is to say, when the vehicle does not turn, the cutoff frequency in the low pass filter 2 becomes $f_{c1}$ but changes from $f_{c1}$ to $f_{c2}$ to be increased with turning of the vehicle. After turning of it, the cutoff frequency changes from $f_{c2}$ to $f_{c1}$ to be decreased. In such a way, the cutoff frequency of the low pass filter 2 is controlled with the angular velocity of rotation $\omega_n$ by means of the rate sensor 3.

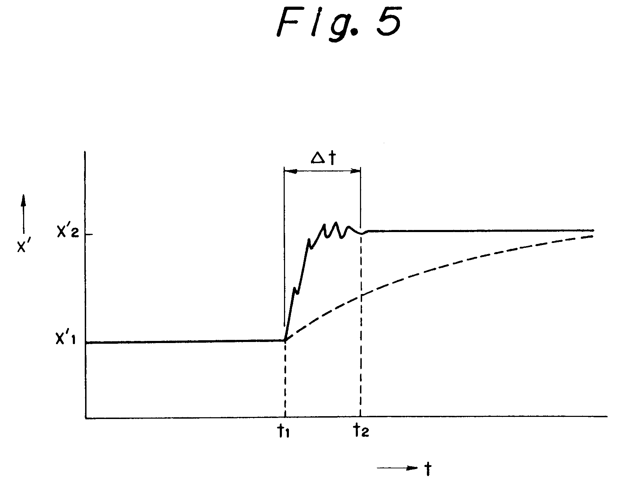

Fig.5 is a view showing a wave shape of an output signal in the low pass filter according to the embodiment. In a wave shape shown in the Figure, letting a digital signal $x'_n$ denote an analog signal $x_n$, the vehicle is going straight ahead or turns in a small degree to the time $t_1$ so that the angular velocity of rotation $\omega_n$ of the rate sensor 3 exists in $0 \leq \omega_n \leq \omega_{n0}$ where the cutoff frequency of the low pass filter 2-1 is little more than $f_{c1}$. Thereby a high frequecy noise is removed to make the output signal $x'$ smooth. When the vehicle turns from the time $t_1$ to the time $t_2$, the output signal $x'$ changes from $x_1$ to $x_2$ and the angular velocity in rotation $\omega_n$ of the rate sensor 2-1 becomes $\omega_n > \omega_{n0}$. Therefore the cutoff frequency of the low pass filter 2-1 changes from $f_{c1}$ to $f_{c2}$ to make a leading edge sharp as shown in the Figure. After the time $t_2$ the angular velocity of rotation $\omega_n$ of the rate sensor 3 is zero, the cutoff frequency changes from $f_{c2}$ to $f_{c1}$ to remove the high frequency conponent so that the output signal $x'$ is smoothed. A dotted line shown in the Figure indicates a changing state of the output signal $x'$ in which the multiplying factors of the prior art low pass filter is kept to $f_{c1}$. Therefore the low pass filter according to the present invention removes the high frequency noise while going straight ahead and also improves a following performance for turning of the vehicle as compared with the prior art. Until the turning of the vehicle finishes, higher mode frequency components are superimposed for a short time but the change of the output $x'$ itself is so great that a driver is hardly influenced. Similarly, the output signal $y'$ may be explained.

Next an another embodiment of a multiplying factor of a multiplier in the low pass filters 2-1 and 2-2 will be discussed. In the embodiment, the multiplying factors of the multipliers 21 and 25, and 23 and 27 of Fig.2 are set to $\alpha = (P_n + \delta)/P_{min}$.

$\beta = (P_{min} - P_n - \delta)/P_{min}$, where $P_n = \min(P_{min} - \delta, k \cdot \omega_n)$, $\delta$ = a given value. This is provided to prevent data from holding a constant value since $x_n = x_{n-1}$ and $y_n = y_{n-1}$ in said embodiment when $\omega_n = 0$ (going straight ahead).

Thus letting an angle between the magnetic north and the moving direction of the vehicle be $\theta$, $x'_n$ and $y'_n$ processed by the low pass filters 2-1 and 2-2 are processed by the position data forming part 7 so as to be

$$\cos\theta = X'_n / \sqrt{(x'_n)^2 + (y'_n)^2}$$
$$\sin\theta = y'_n / \sqrt{(x'_n)^2 + (y'_n)^2}.$$

In order to obtain the geometrical position xx and yy of the vehicle, this result and the velocity of the vehicle V are processed as

$$xx = \int V \cdot \cos\theta \, dt$$
$$yy = \int V \cdot \sin\theta \, dt.$$

This geometrical position xx and yy is displayed as a moving position of the vehicle in the map of the display 8 to be improved regarding to the following performace in the turning of the vehicle according to the invention.

As mentioned before, according to the invention, the cutoff frequency of the low pass filter is increased or decreased depending on the increasing or decreasing of the angular velocity in rotation from the rate sensor so that it is possible to remove the high frequency component of the fluxgate sensor during going straight ahead and improve the following performace during turning.

## Claims

1. An output signal processing unit of a fluxgate sensor, the fluxgate sensor (1) for detecting the magnetic north of a vehicle, the output signal processing unit comprising a low pass filter (2) for removing a high frequency component from an output of the fluxgate sensor (1) and;

   a rate sensor (3) for detecting an angular velocity of rotation on turning of the vehicle;

   characterized in that it further comprises a means for raising or lowering the cutoff frequency of the low pass filter (2) in response to the increase or decrease of the angular velocity as detected by the rate sensor (3).

2. An output signal processing unit according to claim 1, wherein the low pass filter (2) comprises two variable multipliers (21,23,25,27) one of which (21,25) receives the output of the fluxgate sensor (3) and the other of which receives the output of the fluxgate sensor (3) after its passage through a delay element (22,26), outputs of both variable multipliers (21,23,25,27) then being added together in an adder (24,28).

3. An output signal processing unit according to claim 2, wherein the rate sensor (3) output is applied to the variable multipliers (21,23,25,27) to vary their multiplication factor.

4. A vehicle navigation system including an output signal processing unit in accordance with any one of the preceding claims.

**Patentansprüche**

1. Ausgangssignalverarbeitungseinheit für einen Fluxgate-Sensor, wobei der Fluxgate-Sensor (1) zur Erfassung des magnetischen Nordpols zum Fahrzeug dient, und die Ausgabesignalverarbeitungseinheit einen Tiefpaßfilter (2) umfaßt zur Entfernung einer Hochfrequenzkomponente aus einer Ausgabe des Fluxgate-Sensors (1) und; einen Ratensensor (3) zur Erfassung einer Rotationswinkelgeschwindigkeit bei der Drehung des Fahrzeuges; dadurch gekennzeichnet, daß sie ferner ein Mittel umfaßt zur Erhöhung oder Erniedrigung der Abschneidefrequenz des Tiefpaßfilters (2) ansprechend auf die Erhöhung oder Erniedrigung der von dem Ratensensor (3) erfaßten Winkelgeschwindigkeit.

2. Ausgabesignalverarbeitungseinheit gemäß Anspruch 1, dadurch gekennzeichnet, daß der Tiefpaßfilter (2) zwei variable Multiplizierer (21, 23, 25, 27) umfaßt, einer von welchen (21, 25) die Ausgabe des Fluxgate-Sensors (3) empfängt und der andere von welchen die Ausgabe des Fluxgate-Sensors (3) empfängt nach deren Durchgang durch ein Verzögerungselement (22, 26), wobei die Ausgaben der beiden variablen Multiplizierer (21, 23, 25, 27) dann in einem Addierer (24, 28) zusammenaddiert werden.

3. Ausgabesignalverarbeitungseinheit gemäß Anspruch 2, dadurch gekennzeichnet, daß die Ausgabe des Ratensensors (3) angelegt wird an die variablen Multiplizierer (21, 23, 25, 27), um deren Multiplikationsfaktor zu variieren.

4. Ein Fahrzeugnavigationssystem, welches eine Ausgabesignalverarbeitungseinheit in Übereinstimmung mit einem der vorhergehenden Ansprüche enthält.

**Revendications**

1. Une unité de traitement de signaux de sortie d'un capteur à noyau saturable, le capteur à noyau saturable (1) pour détecter le nord magnétique d'un véhicule, l'unité de traitement de signaux de sortie comprenant un filtre passe-bas (2) pour supprimer une composante haute fréquence d'un signal de sortie du capteur à noyau saturable (1) ; et

un capteur de vitesse (3) pour détecter une vitesse angulaire de rotation lors des virages du véhicule ;

caractérisée en ce qu'elle comprend en outre un moyen d'augmenter ou de diminuer la fréquence de coupure du filtre passe-bas (2) en réponse à l'augmentation ou la diminution de la vitesse angulaire telle que détectée par le capteur de vitesse (3).

2. Une unité de traitement de signaux de sortie selon la revendication 1, dans laquelle le filtre passe-bas (2) comprend deux multiplicateurs variables (21,23,25,27), dont un (21,25) reçoit le signal de sortie du capteur à noyau saturable (1), et dont l'autre reçoit le signal de sortie du capteur à noyau saturable (1) après son passage à travers un élément à retard (22,26), les signaux de sortie des deux multiplicateurs variables (21,23,25,27) étant alors additionnés dans un additionneur (24,28).

3. Une unité de traitement de signaux de sortie selon la revendication 2, dans laquelle la sortie du capteur de vitesse (3) est appliquée aux multiplicateurs variables (21,23,25,27) pour varier leur facteur de multiplication.

4. Un système de navigation de véhicule comprenant une unité de traitement de signaux de sortie selon l'une quelconque des revendications 1 à 3.

# *Fig. 1*

Fig. 2

# F I g. 3

EP 0 481 644 B1

# Fig. 4

EP 0 481 644 B1

$|A(0)|$

$3\alpha B$

$1.0$

$|A|$

$W_n > W_{n0}$

$|A(\pi)| = |2kW_n - P_{min}|$
$= |2kW_n - k_{n0}|$

$0 \leq W_n \leq W_{n0}$  $|A(\pi)| = kW_{n0}$

$0$       $2\pi f_{c1}$    $2\pi f_{c2}$       $\pi$

$\longrightarrow W_n = 2\pi f_n$

# Fig. 5

EP 0 481 644 B1